# EUROPÄISCHE PATENTANMELDUNG

(11) **EP 0 620 545 A1**
(43) Veröffentlichungstag der Anmeldung: **19.10.1994**
(21) Anmeldenummer: 94200672.7
(22) Anmeldetag: 16.03.1994
(51) Int. Cl.: G10K 9/13, B60Q 5/00

(54) **Elektrische Schaltanordnung für eine akustische Warneinrichtung**

(30) Priorität: 01.04.1993 DE 4310658
(71) Anmelder: KS AUTOMOBIL-SICHERHEITSTECHNIK GmbH, D-63743 Aschaffenburg (DE)
(72) Erfinder: Bossler, Hans Jürgen, D-64839 Münster (DE)
(74) Vertreter: Fuchs, Luderschmidt & Partner Patentanwälte

(57) **Zusammenfassung**

Bei einer Schaltanordnung für eine akustische Warneinrichtung an Kraftfahrzeugen wird das Signalhorn mittels eines Drucktastschalters über eine Schleifringkonstruktion oder einen bandförmigen Stromleiter gesteuert. Zur Vermeidung der elektrischen Belastung ist das Signalhorn mit der Schleifringkonstruktion bzw. dem Leiterband über einen Feldeffekt-Transistor verbunden.

## Beschreibung

Die Erfindung betrifft eine elektrische Schaltanordnung für eine akustische Warneinrichtung an Kraftfahrzeugen, umfassend ein mittels eines Drucktastschalters über eine Schleifringkonstruktion oder einen in mehreren konzentrischen Wicklungen in einem die Lenkspindel bzw. Lenkradnabe umgebenden Gehäuse angeordneten bandförmigen Stromleiter steuerbares Signalhorn.

Bei den in Kraftfahrzeugen eingesetzten Lenkrädern ist die Lenkradnabe gegenüber der Ebene des Lenkradkranzes versenkt und Lenkradkranz und Lenkradspeichen sind mit einer Schicht aus Kunststoffschaum, dessen zellartige Struktur außen zu einer Haut verdichtet ist, ummantelt. Bei der Endmontage werden die Lenkräder mit den für den Betrieb des Signalhorns erforderlichen elektrischen Bauteilen, wie Schleifringen, Kabeln, Kontaktblechen usw., versehen. Die über der Lenkradnabe angeordnete, als Drucktastschalter für das Ein-/Ausschalten des Signalhorns dienende Abdeckplatte weist auf ihrer Unterseite Kontaktbleche auf, die von korrespondierenden, auf der Lenkradnabe angebrachten Kontaktblechen durch dazwischenliegende Federelemente getrennt sind. Unter Einwirkung einer auf die Abdeckplatte einwirkenden äußeren Kraft wird zwischen den einander gegenüberliegenden Kontaktblechen ein elektrischer Kontakt gebildet und dadurch das Signalhorn eingeschaltet. Bei Fortfall der äußeren Kraft wird die Abdeckplatte durch die Rückstellkraft der Federelemente in ihre Ausgangslage versetzt. Die auf der Lenkradnabe befindlichen Kontaktbleche sind mit Schleifkontakten verbunden, die unmittelbar oder mittelbar auf lenksäulenseitig befestigten Schleifringen gleiten. Von den Schleifringen verläuft der elektrische Kontakt über ein Relais zum Signalhorn. Für die Befestigung der Signalgebungsbauteile müssen verschiedene Befestigungslöcher am Lenkrad in den nicht mit dem Kunststoffschaum ummantelten Bereichen des Lenkradskeletts bzw. der Lenkradnabe mit Bohrungen versehen werden; danach wird das Lenkrad mit den Signalgebungsbauteilen komplettiert. Die Montage der Signalgebungsbauteile ist mit einem beachtlichen Aufwand an Bauteilen und Zeit verbunden. Hinzu kommt, daß es an dem elektromechanischen Drucktastschalter aufgrund der vergleichsweise hohen Stromstärke von 4 bis 6 A zu Funkenabriß und damit zum Verschleiß der Kontaktbleche durch Abbrand kommt, so daß eine einwandfreie Funktion nicht gewährleistet ist. Der Stromleiter kann auch aus einem Leiterband bestehen, das in mehreren konzentrischen Wicklungen in einem die Lenkspindel bzw. Lenkradnabe umgebenden Gehäuse angeordnet ist.

Es ist die Aufgabe der vorliegenden Erfindung, die elektrische Schaltanordnung für eine akustische Warneinrichtung an Kraftfahrzeugen zu vereinfachen, insbesondere den Aufwand an Kabeln zu senken, zusätzlich Steckplatz in der zentralen elektrischen Anlage des Kraftfahrzeugs zu gewinnen und mit vergleichsweise einfachen Schaltelementen im Lenkrad auszukommen, ohne daß die Funktionsfähigkeit der akustischen Warneinrichtung beeinträchtigt wird.

Die Lösung dieser Aufgabe besteht darin, daß das Signalhorn mit der Schleifringkonstruktion bzw. dem Leiterband über einen Feldeffekt-Transistor, vorzugsweise einen selbstüberwachenden MOSFET-Transistor, verbunden ist, durch den die Stromleitfähigkeit gesteuert wird.

Da die Ansteuerleistung eines solchen Transistors mit z.B. max. 10 mA vergleichsweise sehr niedrig ist, erfolgt praktisch keine elektrische Belastung des Drucktastschalters für das Ansteuern des Signalhorns. Bei Einsatz einer elektronischen Konstruktion unterbleibt der Abbrand, so daß die Tastenkonstruktion einfacher gestaltet ist. Darüber hinaus ist der Transistor mit einem Temperaturschutz ausgestattet, besitzt eine Überstromsicherung und einen integrierten Verpolungsschutz.

Es ist auch möglich, bei herkömmlichen Schaltanordnungen für akustische Warneinrichtungen an Kraftfahrzeugen, die durch die Betätigung eines Relais ausgelöst werden, den Feldeffekt-Transistor zwischen der Schleifringkonstruktion bzw. dem Leiterband und dem Relais anzuordnen, um ähnliche Vorteile zu erreichen.

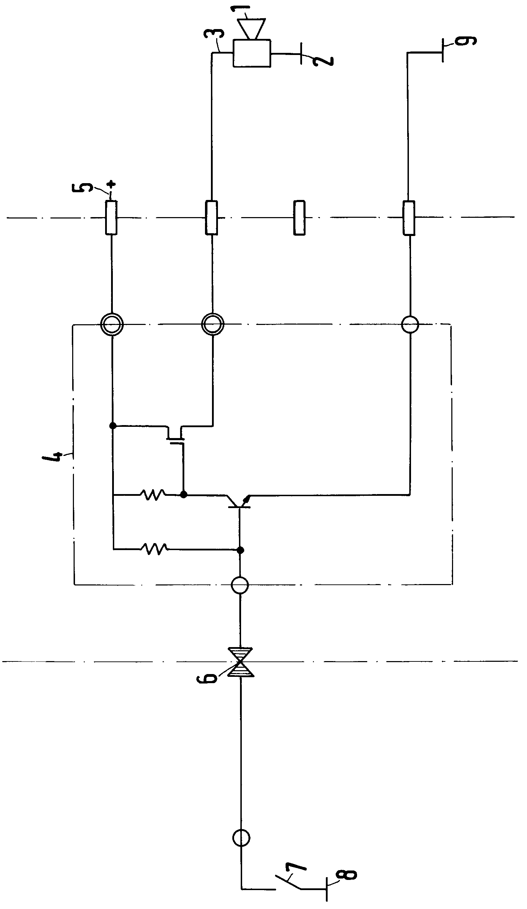

Die Schaltanordnung ist in der Zeichnung beispielhaft schematisch dargestellt und wird nachstehend näher erläutert.

Der Minuspol des Signalhorns (1) ist mit einem als Masse (2) dienenden metallischen Teil des Fahrzeugs und der Pluspol (3) des Signalhorns (1) mit dem MOSFET-Transistor (4) verbunden. Der Eingang (5) des MOSFET-Transistors (4) ist mit der Schleifringkonstruktion (6) gekoppelt. Mittels des mechanischen Drucktastschalters (7), dessen Masse (8) die Lenkwelle bildet, wird der Stromkreis geschlossen und damit das Signalhorn (1) in Betrieb gesetzt. Da der MOSFET-Transistor (4), der mit der Masse (9) des Fahrzeugs verbunden ist, mit vergleichsweise niedriger Ansteuerleistung von z.B. 10 mA arbeitet, ist die Tastenleistung gering. Der Verkabelungsaufwand läßt sich um bis zu 50 % senken.

## Patentansprüche

1. Schaltanordnung für eine akustische Warneinrichtung an Kraftfahrzeugen, umfassend ein mittels eines Drucktastschalters über eine Schleifringkonstruktion oder einen in mehreren konzentrischen Wicklungen in einem die Lenkspindel bzw. Lenkradnabe umgebenden Gehäuse angeordneten bandförmigen Stromleiter steuerbares Signalhorn, dadurch gekennzeichnet, daß das Signalhorn (1) mit der Schleifringkonstruktion (6) bzw. dem Leiterband über einen Feldeffekt-Transistor (4) verbunden ist.

2. Schaltanordnung für eine akustische Warneinrichtung an Kraftfahrzeugen, umfassend ein mittels eines Drucktastschalters über eine Schleifringkonstruktion oder einen in mehreren konzentrischen Wicklungen in einem die Lenkspindel bzw. Lenkradnabe umgebenden Gehäuse angeordneten bandförmigen Stromleiter über ein Relais steuerbares Signalhorn, dadurch gekennzeichnet, daß das Relais mit der Schleifringkonstruktion bzw. dem Leiterband über einen Feldeffekt-Transistor verbunden ist.

3. Schaltanordnung nach einem der Ansprüche 1 und 2, dadurch gekennzeichnet, daß der Feldeffekt-Transistor (4) aus einem selbstüberwachenden MOSFET-Transistor besteht.
